(19) Europäisches Patentamt
European Patent Office
Office européen des brevets

(11) **EP 4 549 099 A1**

(12) **EUROPEAN PATENT APPLICATION**

(43) Date of publication:
**07.05.2025 Bulletin 2025/19**

(21) Application number: **24173501.8**

(22) Date of filing: **30.04.2024**

(51) International Patent Classification (IPC):
**B25J 9/00** (2006.01) **B62D 57/032** (2006.01)

(52) Cooperative Patent Classification (CPC):
**B25J 9/0006; B62D 57/032**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.10.2023 CN 202311434634**

(71) Applicant: **Beijing Xiaomi Robot Technology Co., Ltd.**
**Beijing 100176 (CN)**

(72) Inventor: **CAO, Sheng**
**Beijing, 100176 (CN)**

(74) Representative: **Dehns Germany Partnerschaft mbB**
**Theresienstraße 6-8**
**80333 München (DE)**

(54) **METHOD AND APPARATUS FOR CONTROLLING MOTION, ROBOT AND STORAGE MEDIUM**

(57) The disclosure relates to a method and apparatus for controlling motion, a robot and a storage medium, and relates to the technical field of robots. The method includes: determining (S11) a motion height of a robot at a target gait; determining (S12) a motion moment corresponding to the motion height according to durations of different motion attitudes executed by the robot at the target gait; determining (S13) a motion trajectory of the robot based on a correspondence relationship between the motion height and the motion moment; and controlling (S14) the robot to move with the motion trajectory.

```
┌─────────────────────────────────────────────────────────────┐
│ Determine a motion height of a robot at a target gait        │── S11
└─────────────────────────────────────────────────────────────┘
                            │
                            ▼
┌─────────────────────────────────────────────────────────────┐
│ Determine a motion moment corresponding to the motion height │── S12
│ according to durations of different motion attitudes executed│
│ by the robot at the target gait                              │
└─────────────────────────────────────────────────────────────┘
                            │
                            ▼
┌─────────────────────────────────────────────────────────────┐
│ Determine a motion trajectory of the robot based on a        │── S13
│ correspondence relationship between the motion height and    │
│ the motion moment                                            │
└─────────────────────────────────────────────────────────────┘
                            │
                            ▼
┌─────────────────────────────────────────────────────────────┐
│ Control the robot to move with the motion trajectory         │── S14
└─────────────────────────────────────────────────────────────┘
```

Figure 1

EP 4 549 099 A1

**Description**

TECHNICAL FIELD

The disclosure relates to the technical field of robots, in particular to a method and apparatus for controlling motion, a robot and a storage medium.

BACKGROUND OF THE INVENTION

At present, most robots, considering their stability, walk at a constant trunk height and/or a constant foot end height when walking. That is, the trunk height and/or foot end height of a robot are/is constant and always parallel to the ground. The robot achieves walking by bending knees.

SUMMARY OF THE INVENTION

To solve the problems existing in the related art, the disclosure provides a method and apparatus for controlling motion, a robot and a storage medium.

According to a first aspect of examples of the disclosure, a method for controlling motion is provided, including:

determining a motion height of a robot at a target gait;

determining a motion moment corresponding to the motion height according to durations of different motion attitudes executed by the robot at the target gait;

determining a motion trajectory of the robot based on a correspondence relationship between the motion height and the motion moment; and

controlling the robot to move with the motion trajectory.

Optionally, the motion trajectories corresponding to different target gaits are different.

Optionally, the motion height includes a trunk height, and the motion trajectory includes a trunk motion trajectory; and determining the motion trajectory of the robot based on the correspondence relationship between the motion height and the motion moment includes:

determining the trunk motion trajectory of the robot based on a correspondence relationship between the trunk height and the motion moment.

Optionally, the motion height includes an ascending trunk height or a descending trunk height; and determining the motion height of the robot at the target gait includes:

obtaining a first displacement which the robot passes at present according to a walking speed of the robot, a single-foot walking duration of the robot executing a single-foot walking attitude and a current duration of a current motion of the robot; and

obtaining the ascending trunk height or the descending trunk height according to the first displacement and a trunk length of the robot;

or;

the motion height includes a minimum trunk height; and determining the motion height of the robot at the target gait includes:

obtaining a second displacement which the robot passes at present according to a walking speed of the robot and a single-foot walking duration of the robot executing a single-foot walking attitude; and

obtaining the minimum trunk height according to the second displacement and a trunk length of the robot.

Optionally, the motion attitude includes a single-foot walking attitude, and the motion height includes a trunk height; and determining the motion moment corresponding to the motion height according to the durations of the different motion attitudes executed by the robot at the target gait includes:

determining a motion moment corresponding to the trunk height according to a single-foot walking duration of the robot executing the single-foot walking attitude, the single-foot walking attitude being a walking attitude of a single foot end of the robot from lifting-off to touching-down.

Optionally, the motion height includes a foot end height, and the motion trajectory includes a foot end motion trajectory; and determining the motion trajectory of the robot based on the correspondence relationship between the motion height and the motion moment includes:

determining the foot end motion trajectory of the robot based on a correspondence relationship between the foot end height and the motion moment.

Optionally, the motion height includes a maximum foot end height; and determining the motion height of the robot at the target gait includes:

obtaining the maximum foot end height according to a foot end touching-down height, a foot end lifting-off height and a maximum foot end swing height of the robot.

Optionally, the motion height includes a maximum foot end height, the maximum foot end height includes a maximum tiptoe height, and the target gait is a first gait of advancing; and determining the motion moment corresponding to the motion height according to the durations of the different motion attitudes executed by the robot at the target gait includes:

obtaining a motion moment corresponding to the maximum tiptoe height according to a tiptoe lifting-off moment of the robot at the first gait and a hanging duration of the robot executing a foot end hanging attitude;

or;

the motion height includes a maximum foot end height, the maximum foot end height includes a maximum heel height, and the target gait is a first gait of advancing; and determining the motion moment corresponding to the motion height according to the durations of the different motion attitudes executed by the robot at the target gait includes:

obtaining a motion moment corresponding to the maximum heel height according to a heel touching-down moment of the robot at the first gait and a hanging duration of the robot executing a foot end hanging attitude.

Optionally, the motion height includes a maximum foot end height, the maximum foot end height includes a maximum tiptoe height, the target gait is a second gait of backward walking or stepping, and the method further includes:

obtaining a motion moment corresponding to the maximum tiptoe height according to a tiptoe lifting-off moment and a tiptoe touching-down moment of the robot at the second gait.

Optionally, the motion height includes a maximum foot end height, the maximum foot end height includes a maximum heel height, the target gait is a second gait of backward walking or stepping, and the method further includes:

obtaining a motion moment corresponding to the maximum heel height according to a heel lifting-off moment and a heel touching-down moment of the robot at the second gait.

Optionally, the foot end includes a tiptoe and a heel, and the maximum tiptoe height of the tiptoe is less than the maximum heel height of the heel.

Optionally, the hanging duration of the foot end is greater than a touching-down duration needed by touching-down of a heel.

Optionally, the hanging duration of the foot end is greater than a lifting duration needed by lifting of a tiptoe.

According to a second aspect of examples of the disclosure, a robot is provided, including:

a processor; and

a memory, configured to store processor-executable instructions; where

the processor is configured to:

determine a motion height of a robot at a target gait;

determine a motion moment corresponding to the motion height according to durations of different motion attitudes executed by the robot at the target gait;

determine a motion trajectory of the robot based on a correspondence relationship between the motion height and the motion moment; and

control the robot to move with the motion trajectory.

According to a third aspect of examples of the disclosure, a non-transitory computer-readable storage medium is provided, storing computer program instructions, and the program instructions, when executed by a processor, implement following steps of:

determining a motion height of a robot at a target gait;

determining a motion moment corresponding to the motion height according to durations of different motion attitudes executed by the robot at the target gait;

determining a motion trajectory of the robot based on a correspondence relationship between the motion height and the motion moment; and

controlling the robot to move with the motion trajectory.

The technical solution provided by the examples of the disclosure may include the following beneficial effects: By means of the above technical solution, motion heights of the robot at different target gaits and motion moments corresponding to different motion heights may be predefined, as the motion heights at the different target gaits are planned according to human walking habits, a motion height change curve at the target gaits is similar to a motion height change curve during human walking, motion trajectories of the robot at the different target gaits are different and are similar to motion trajectories of human walking instead of being constant, and thus the robot is more anthropomorphic during walking, its mechanical properties are lowered, and natural properties are improved.
It is to be understood that the above general descriptions and later detailed descriptions are merely exemplary and illustrative, and cannot limit the disclosure.

BRIEF DESCRIPTION OF DRAWINGS

The accompanying drawings here are incorporated into the specification and constitute a part of the specification, show examples consistent with the disclosure, and together with the specification, are used to explain the principle of the disclosure.

Fig. 1 is a flow diagram of a method for controlling motion illustrated according to an example.

Fig. 2 is a schematic diagram of a robot illustrated according to an example.

Fig. 3 is a schematic diagram of different trunk heights of a robot illustrated according to an example.

Fig. 4 is a schematic diagram of a walking trajectory during foot end advancing illustrated according to an example.

Fig. 5 is a schematic diagram of controlling a robot according to a motion trajectory illustrated according to an example.

Fig. 6 is a schematic diagram of a walking trajectory during foot end advancing illustrated according to an example.

Fig. 7 is a schematic diagram of a walking trajectory during foot end advancing illustrated according to an example.

Fig. 8 is a schematic diagram of calculating a projection length illustrated according to an example.

Fig. 9 is a schematic diagram of calculating a trunk height illustrated according to an example.

Fig. 10 is a schematic diagram of a foot end of a robot illustrated according to an example.

Fig. 11 is a schematic diagram of a walking trajectory of backward walking of a foot end illustrated according to an example.

Fig. 12 is a schematic diagram of a walking trajectory of stepping of a foot end illustrated according to an example.

Fig. 13 is a structural block diagram of an apparatus for controlling motion illustrated according to an example.

Fig. 14 is a structural block diagram of a robot illustrated according to an example.

Fig. 15 is a flow diagram of another method for controlling motion illustrated according to an example.

Fig. 16 is a flow diagram of another method for controlling motion illustrated according to an example.

DETAILED DESCRIPTION OF THE INVENTION

Examples will be described in detail here, and instances of the examples are shown in the accompanying drawings. When the following description refers to the accompanying drawings, unless otherwise indicated, the same numbers in different accompanying drawings indicate the same or similar elements. The implementations described in the following examples do not represent all implementations consistent with the disclosure. Rather, they are merely instances of apparatuses and methods consistent with some aspects of the disclosure as detailed in the appended claims.

It is to be noted that all actions to acquire signals, information, or data in the disclosure are carried out in accordance with the corresponding data protection regulations and policies of the country where they are located, and authorized by the corresponding apparatus owner.

At present, most robots, considering their stability, walk at a constant trunk height and/or a constant foot end height when walking. That is, the trunk height and/or foot end height of a robot are/is constant and always parallel to the ground. The robot achieves walking by bending knees, causing the robot to appear stiff in action during walking, with strong mechanical properties and low anthropomorphic natural properties.

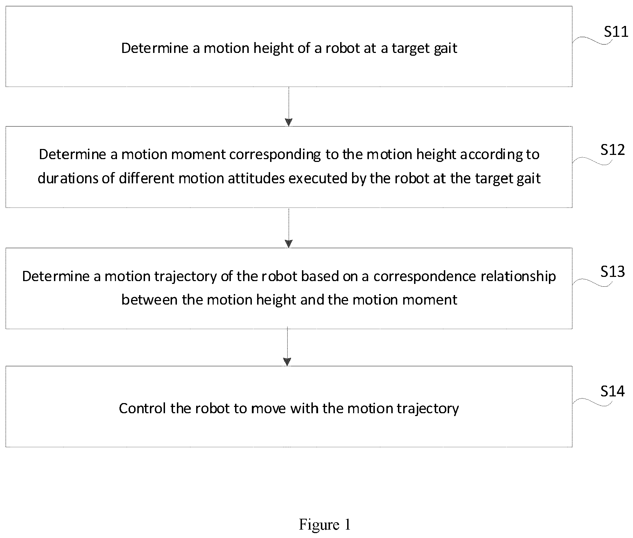

Fig. 1 is a flow diagram of a method for controlling motion illustrated according to an example, as shown in Fig. 1, the method includes steps S11-S14.

In step S11, a motion height of a robot at a target gait is determined.

When a human walks, a motion height of the human will change with the walking of the human, and thus the disclosure may set a trajectory of the motion height of the robot to be different with different target gaits, so that when the robot walks, the motion height of the robot will change just like the motion height of the human.

The motion height includes a trunk height and a foot end height of the robot.

The trunk height of the robot refers to a height of a certain target portion, used as a reference point, of the robot when the robot walks. The target portion may be a position such as a shoulder, an elbow, a hip, a knee and an ankle of the robot.

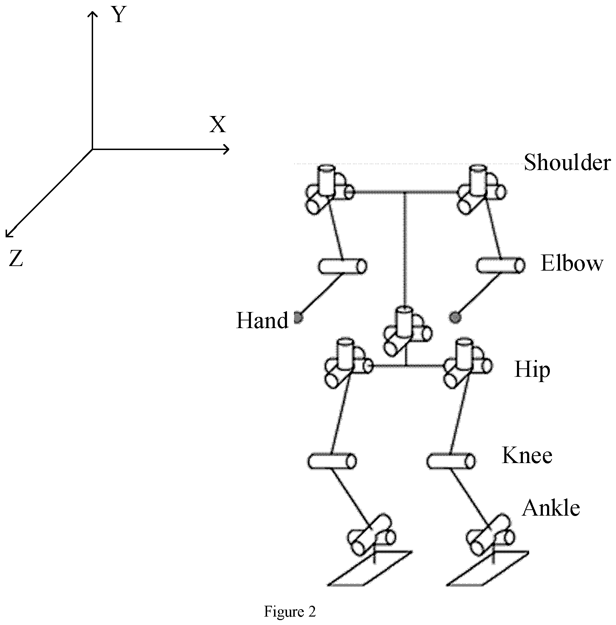

For example, referring to Fig. 2, an upper limb of the robot includes four degrees of freedom, namely shoulder pitch, shoulder roll, shoulder yaw and elbow pitch. In addition, in an example, a motor may be set on the hand shown in Figure 2, so that the upper limb of the robot includes at least one of hand pitch, hand roll and hand yaw. A lower limb of the robot includes six degrees of freedom, namely hip yaw, hip roll, hip pitch, knee pitch, ankle pitch, and ankle roll respectively.

With a coordinate system shown in Fig. 2 as an example, shoulder pitch refers to rotation of the shoulder around an axis X, shoulder roll refers to rotation of the shoulder around an axis Z, and shoulder yaw refers to rotation of the shoulder around an axis Y. Elbow pitch is rotation of the elbow around the axis X. Hand pitch is rotation of the hand around the axis X, hand roll refers to rotation of the hand around an axis Z, and hand yaw refers to rotation of the hand around an axis Y. Hip yaw is rotation of the hip around the axis Y, hip roll is rotation of the hip around the axis Z, and hip pitch is rotation of the hip around the axis X. Knee pitch is rotation of the knee around the axis X. Ankle yaw is rotation of the ankle around the axis X, and ankle roll is rotation of the ankle around the axis Z.

Among the plurality of degrees of freedom, if the knee is used as the reference point, then when the robot walks, a height of the knee will change, and the height of the knee may be used as the trunk height of the robot. If the shoulder is used as the reference point, then when the robot walks, a height of the shoulder will change, and the height of the shoulder may be likewise used as the trunk height of the robot.

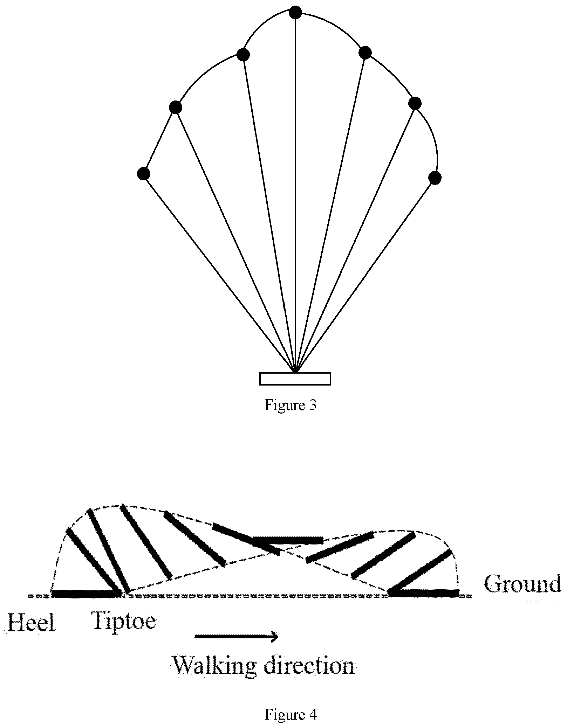

After the trunk heights of the robot at different moments are determined, the trunk heights at the different moments may form a trunk motion trajectory as shown in Fig. 3. The box in Fig. 3 may be regarded as the foot end of the robot, and the connection line between the black point and the box may reflect the positional relationship between a certain target portion and the foot end. Connection lines between a plurality of black points in Fig. 3 may be regarded as the trunk motion trajectory formed by the trunk heights at the different moments, and the trunk motion trajectory shown in Fig. 3 is only a schematic diagram and does not represent a limitation on the trunk motion trajectory. The trunk motion trajectory refers to a change trajectory of the trunk height of a certain target portion of the robot with time.

The foot end may be regarded as the sole of the foot, refers to the end where the robot's foot is in contact with the ground. The foot end height of the robot refers to a height of a foot end of the robot with the ground as a reference point when the robot walks.

For example, referring to Fig. 4, after the foot end heights of the robot at different moments are determined, the foot end heights at the different moments may form a foot end motion trajectory as shown in Fig. 4, and the foot end motion trajectory refers to a change trajectory of the foot end height of the foot end of the robot with time.

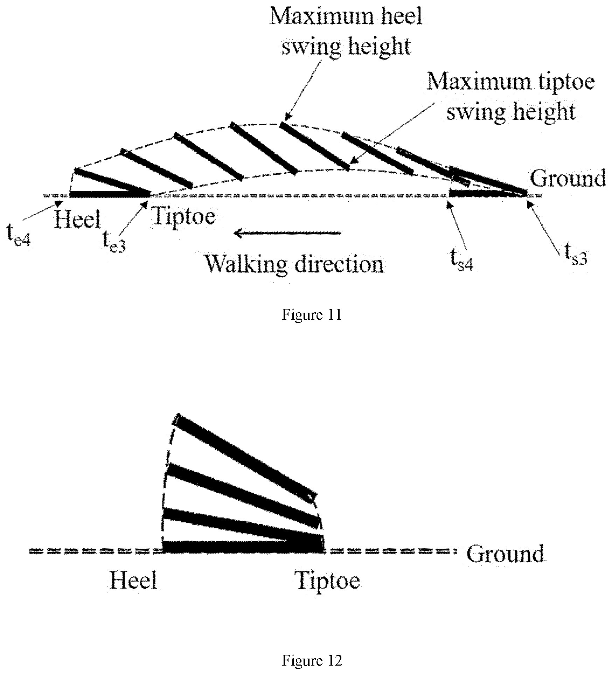

The target gait includes a first gait and a second gait, the first gait is a gait of advancing, such as a walking gait or running gait of advancing, and the second gait is a gait of backward walking or stepping. The robot has different motion trajectories at different target gaits, it may also be understood that motion height change curves with time of the robot at the different target gaits are different. For example, a motion height change curve at the first gait may be as shown in Fig. 4, a motion height change curve at the gait of backward walking in the second gait may be as shown in Fig. 11, and a motion height change curve at the gait of stepping in the second gait may be as shown in Fig. 12.

When the motion height change curve at the target gait is planned, it may be planned according to human walking habits, so that the motion height change curve at the target gait can be more anthropomorphic.

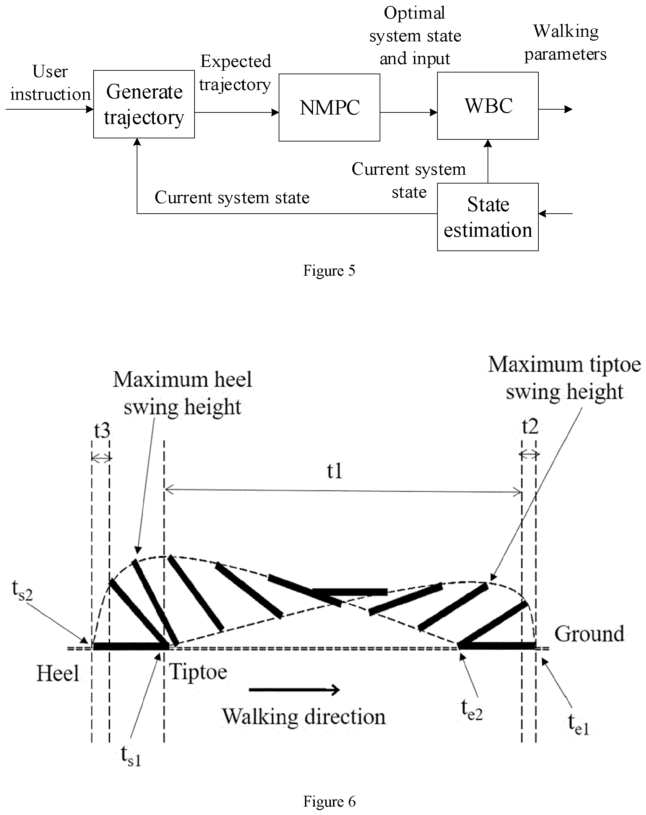

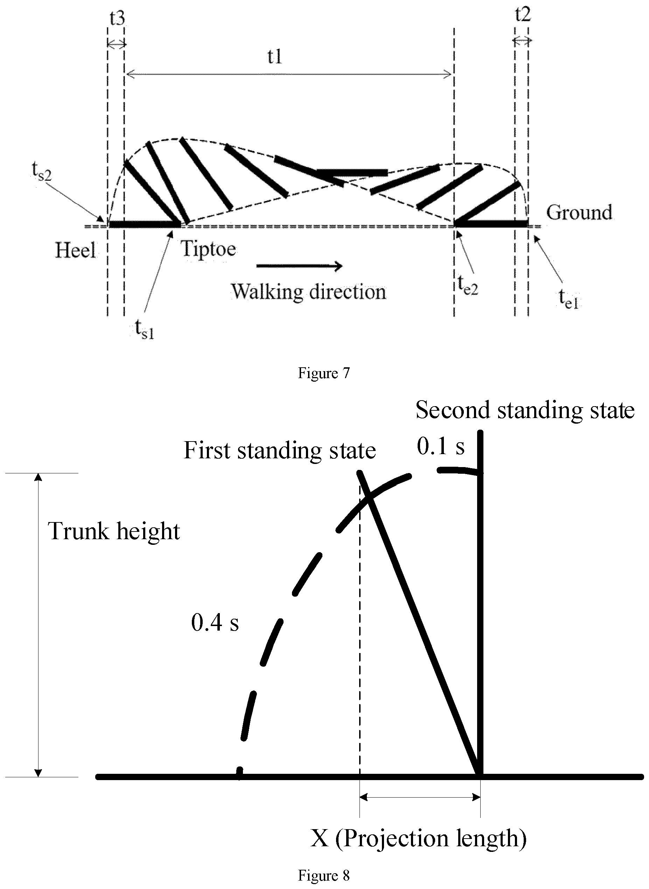

For example, when a human advances normally, a swing amplitude of a tiptoe is apparently smaller than a swing amplitude of a heel, so in a process of defining the first gait or the second gait, a maximum tiptoe height that can be reached by the tiptoe may also be set to be less than a maximum heel swing height that can be reached by the heel, a maximum tiptoe height of a right tiptoe is apparently less than a maximum heel height of a left heel, referring to Fig. 6 and Fig. 7, in a case of assuming that the ground height is the same, a maximum swing height of the tiptoe is also lower than a maximum swing height of the heel, and thus the first gait or the second gait of walking may be more anthropomorphic when the robot advances.

Returning to FIG. 1, in step S12, a motion moment corresponding to the motion height is determined according to durations of different motion attitudes executed by the robot at the target gait.

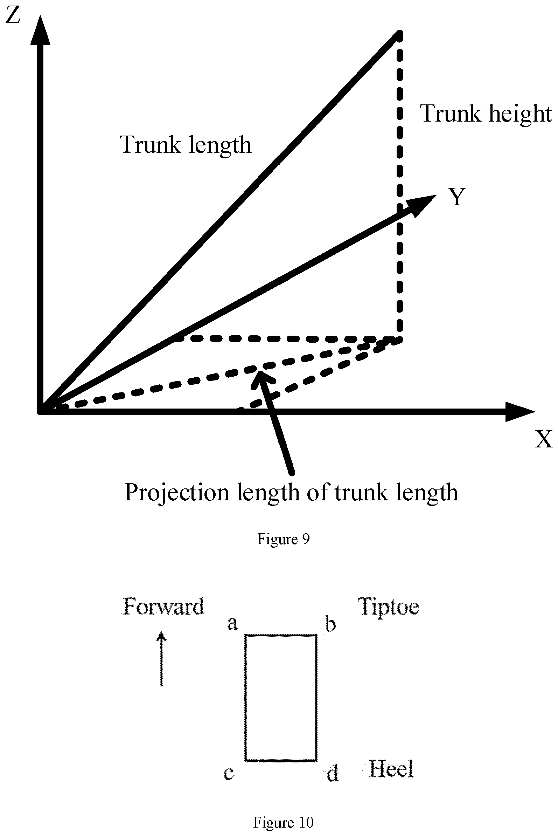

The motion attitudes include a foot end attitude which is being executed by the robot at a current moment, referring to Fig. 10 and Table 1, it is set that each robot has four contacts a, b, c, and d, which are two tiptoes (a and b) and two heels (c and d) respectively, the two tiptoes are simplified as a group of tiptoes and the two heels are simplified as a group of heels below, and it is defined that the tiptoe of a left foot is "LT", the heel of the left foot is "LH", the tiptoe of a right foot is "RT", and the heel of the right foot is "RH"; and it is defined that the tiptoes or the heels being in contact with the ground is "1" and the heels or the tiptoes being not in contact with the ground is "0", so that following Table 1 is obtained:

Table 1

| Portion | LT | LH | RT | RH | Name of motion attitude | Definition of Name of Motion Attitude |
|---|---|---|---|---|---|---|
| Contact state | 0 | 0 | 1 | 1 | LN_RA | Left foot lifting, right foot being in contact with the ground |
| | 0 | 1 | 1 | 1 | LH_RA | Heel of left foot being in contact with the ground, right foot being in contact with the ground |
| | 1 | 0 | 1 | 1 | LT_RA | Left tiptoe being in contact with the ground, right foot being in contact with the ground |
| | 1 | 1 | 0 | 0 | LA_RN | Left foot being in contact with the ground, right foot lifting |
| | 1 | 1 | 0 | 1 | LA_RH | Left foot being in contact with the ground, heel of right foot being in contact with the ground |
| | 1 | 1 | 1 | 0 | LA_RT | Left foot being in contact with the ground, right tiptoe being in contact with the ground |

As shown in Table 1, it may be preset that a coding form corresponding to the motion attitude of left foot lifting and right foot being in contact with the ground of the robot is "0011", a coding form corresponding to the motion attitude of heel of left foot being in contact with the ground and right foot being in contact with the ground of the robot is "0111", a coding form corresponding to the motion attitude of left tiptoe being in contact with the ground and right foot being in contact with the ground of the robot is "1011", a coding form of the motion attitude of left foot being in contact with the ground and right foot lifting of the robot is "1100", a coding form corresponding to the motion attitude of left foot being in contact with the ground and heel of right foot being in contact with the ground of the robot is "1101", and a coding form of left foot being in contact with the ground and right tiptoe being in contact with the ground of the robot is "1110". The coding forms of the different motion attitudes executed by the robot are defined in Table 1 above.

On the basis of Table 1, the motion attitudes of the robot at the first gait of advancing may be defined as in Table 2 below:

Table 2

| No. | Name of motion attitude | Duration | Definition of Name of Motion Attitude |
|---|---|---|---|
| 1 | LA_RN | t1 | Left foot being in contact with the ground, right foot lifting |

(continued)

| No. | Name of motion attitude | Duration | Definition of Name of Motion Attitude |
|---|---|---|---|
| 2 | LA_RH | t2 | Left foot being in contact with the ground, heel of right foot being in contact with the ground |
| 3 | LT_RA | t3 | Left tiptoe being in contact with the ground, right foot being in contact with the ground |
| 4 | LN_RA | t1 | Left foot lifting, right foot being in contact with the ground |
| 5 | LH_RA | t2 | Heel of left foot being in contact with the ground, right foot being in contact with the ground |
| 6 | LA_RT | t3 | Left foot being in contact with the ground, right tiptoe being in contact with the ground |

In Table 2, the first gait of the robot may be defined that a sequence of Nos. 123456 is taken as a walking sequence of the left foot and the right foot of the robot within one dual-foot walking duration, and then the defined first gait of the robot within the one dual-foot walking duration is the robot executing LA_RN for t1 first, then executing LA_RH for t2, then executing LT_RA for t3, then executing LN_RA for t1, then executing LH_RA for t2 and finally executing LA_RT for t3. The dual-foot walking duration refers to a duration used for the left foot and the right foot of the robot to complete one pace respectively, and in Table 2 above, No. 1 to No. 3 define single-foot walking attitudes of a single foot (right foot) at the first gait, and No. 4 to No. 6 define single-foot walking attitudes of a single foot (left foot) at the first gait.

Certainly, it may also be defined that the robot takes a sequence of Nos. 456123 as the walking sequence of the left foot and the right foot of the robot within one dual-foot walking duration.

On the basis of Table 1, the motion attitudes of the robot at the second gait of backward walking or stepping may be defined as in Table 3 below:

Table 3

| No. | Name of motion attitude | Duration | Definition of Name of Motion Attitude |
|---|---|---|---|
| 1 | LA_RN | t1 | Left foot being in contact with the ground, right foot lifting |
| 2 | LA_RT | t2 | Left foot being in contact with the ground, heel of right foot being in contact with the ground |
| 3 | LT_RA | t3 | Heel of left foot being in contact with the ground, right foot being in contact with the ground |
| 4 | LN_RA | t1 | Left foot lifting, right foot being in contact with the ground |
| 5 | LT_RA | t2 | Heel of left foot being in contact with the ground, right foot being in contact with the ground |
| 6 | LA_RT | t3 | Left foot being in contact with the ground, heel of right foot being in contact with the ground |

In Table 3, the second gait of the robot may be defined that a sequence of Nos. 123456 is taken as a walking sequence of the left foot and the right foot of the robot within one dual-foot walking duration, and then the defined second gait is the robot executing LA_RN for t1 first, then executing LA_RT for t2, then executing LT_RA for t3, then executing LN_RA for t1, then executing LT_RA for t2 and finally executing LA_RT for t3. In Table 3 above, No. 1 to No. 3 define single-foot walking attitudes of a single foot (right foot) at the second gait, and No. 4 to No. 6 define single-foot walking attitudes of a single foot (left foot) at the second gait.

It may be understood that in Table 2 and Table 3, t1 is a lifting duration needed by lifting of the foot end, and the duration needed by lifting of the foot end may be a lifting duration needed by lifting of the tiptoes; t2 is a hanging duration of the foot end, the hanging duration of the foot end may be a tiptoe hanging duration or a heel hanging duration, and the tiptoe hanging duration and the heel hanging duration are the same; and t3 is a touching-down duration needed by touching-down of the foot end, and the duration needed by touching-down of the foot end may be a touching-down duration needed by touching-down of the heels.

It can be seen from Table 2 and Table 3 that, the durations corresponding to the different motion attitudes are different, and thus the current motion moments of different motion heights at the target gait may be calculated according to the durations corresponding to the different motion attitudes. After the different motion heights and the motion moments corresponding to the different motion heights are obtained, a correspondence relationship between the motion heights and the motion moments at the target gait can be obtained.

In addition, referring to Table 2 and Table 3, when a human advances normally, the hanging duration of the foot end t2 is typically greater than the touching-down duration t3 used for touching-down of the heels or the lifting duration t1 used for lifting of the tiptoes, so in a process of designing the first gait or the second gait, referring to Fig. 6 and Fig. 7, the hanging duration of the foot end t1 may also be set to be greater than the touching-down duration t2 needed by touching-down of the heels or the lifting duration t3 needed by lifting of the tiptoes, so as to make the first gait or the second gait of the robot more anthropomorphic.

In step S13 in FIG. 1, a motion trajectory of the robot is determined based on the correspondence relationship between the motion height and the motion moment.

After the correspondence relationship between the motion height at the target gait and the motion moment is obtained, the motion trajectory corresponding to the target gait can be planned.

For example, taking an example that the motion height is the foot end height, after a correspondence relationship between different motion moments and different motion heights at the first gait of advancing is obtained, a foot end motion trajectory of the robot at the first gait of advancing as shown in Fig. 6 may be planned with the motion moments as abscissas and the foot end heights as ordinates.

For another example, taking an example that the motion height is the foot end height, after a correspondence relationship between different moments and different motion heights at the second gait of backward walking is obtained, a foot end motion trajectory of the robot at the second gait of backward walking as shown in Fig. 11 may be planned with the motion moments as abscissas and the foot end heights as ordinates.

In step S14, the robot is controlled to move with the motion trajectory.

The motion trajectory is a defined expected motion trajectory, and may also be understood as expecting the robot to move with the motion trajectory.

In an example, as shown in Figure 5, in response to the user instruction, the expected trajectory may be obtained through the steps of generating the trajectory (this step may include the step S 11 to step S 14), that is, the motion trajectory in step S13. The expected trajectory may be planned based on user instructions and the current system state of the robot, which is obtained by estimating the state of the robot. Further, using the expected trajectory as the input parameter of the NMPC (Nonlinear Model Predictive Control) model may predict the optimal system state and input that enables the robot to move according to the expected trajectory. The optimal system state and input and the current system state of the robot as the input parameters of the WBC (Whole Body Control) model may obtain the walking parameters output by the WBC model to control the walking of the robot and realize the movement of the robot control, for example, the walking parameters may include the joint torque used to control the movement of each joint at different times.

By means of the technical solution, the motion heights of the robot at different target gaits and motion moments corresponding to different motion heights may be predefined, as the motion heights at the different target gaits are planned according to human walking habits, a motion height change curve at the target gaits is similar to a motion height change curve during human walking, motion trajectories of the robot at the different target gaits are different and are similar to motion trajectories of human walking instead of being constant. Thus the robot is more anthropomorphic during walking, its mechanical properties are lowered, and natural properties are improved.

An example involved in step S11 to step S14 is introduced below, and as the motion height includes the trunk height, this example is used to explain how to obtain a more anthropomorphic trunk motion trajectory.

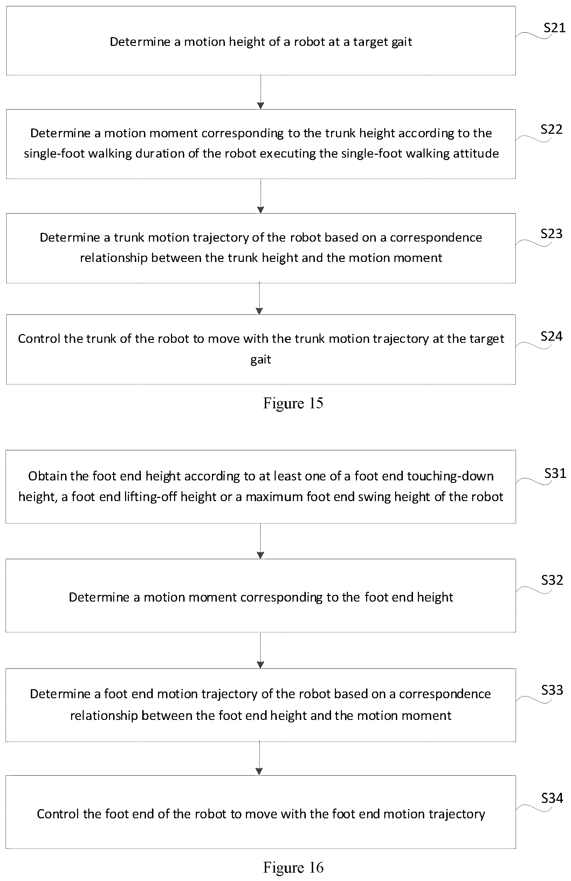

Fig. 15 is a flow diagram of another method for controlling motion illustrated according to an example, as shown in Fig. 15, the method includes steps S21-S24.

In step S21, a motion height of a robot at a target gait is determined. The motion height includes an ascending trunk height, a descending trunk height, a minimum trunk height and a maximum trunk height.

(1) As for the ascending trunk height of the robot, a first displacement which the robot passes at present may be obtained according to a walking speed of the robot, a single-foot walking duration of the robot executing a single-foot walking attitude and a current duration of a current motion of the robot; and the ascending trunk height is obtained according to the first displacement and a trunk length of the robot.

Referring to Fig. 6, it is assumed that a heel lifting-off moment $t_{s2}$ of a foot end of the robot is taken as a starting moment of the single-foot walking duration and a tiptoe touching-down moment $t_{e1}$ of the foot end is taken as an ending moment of the single-foot walking duration. Then a first target duration needed by the robot from a current state to the maximum trunk height may be obtained by subtracting a current duration experienced by the robot moving from a starting state of the single-foot walking attitude to the current state from a duration of the robot executing half of the single-foot walking attitude, namely half of the single-foot walking duration of the robot, and then a product of the first target duration and the walking speed is taken as the first displacement. Finally the ascending trunk height is obtained according to the first displacement and the trunk length of the robot. The single-foot walking duration refers to a duration used for one foot end alone of the robot to complete one single-foot walking attitude, and the single-foot walking attitude refers to one pace.

For example, the first displacement may be obtained through the following formula (1), and the first displacement includes a displacement in a direction x and a displacement in a direction y of the robot:

$$x = v_x * ((t_1 + t_2 + t_3)/2 - t_{cur-start})$$

$$y = v_y * (\frac{t_1+t_2+t_3}{2} - t_{cur-start}) \quad (1)$$

In formula (1), $x$ is the displacement in the direction x of the robot, and $y$ is the displacement in the direction y of the robot; $(t_1 + t_2 + t_3)/2$ is half of the single-foot walking duration; $(t_1 + t_2 + t_3)$ is the single-foot walking duration which the robot passes, which may also be understood as a duration from the heel lifting-off moment to the tiptoe touching-down moment of a single foot end of the robot; $v_x$ is a walking speed in the direction x of the robot; $v_y$ is a walking speed in the direction y of the robot; and $t_{cur-start}$ is the current duration experienced by the robot moving from the starting state to the current state.

In addition, referring to Fig. 6 and Fig. 7, within the single-foot walking duration of the robot, a duration between the heel lifting-off moment $t_{s2}$ and a tiptoe lifting-off moment $t_{s1}$ is t3 in Table 2 and Table 3, and this duration may also be understood as a lifting duration needed by lifting of a tiptoe.

A duration between the tiptoe lifting-off moment $t_{s1}$ and a heel touching-down moment $t_{e2}$ is t1 in Table 2 and Table 3, the duration may also be understood as a hanging duration in which the whole foot end is not in contact with the ground, and the hanging duration of the foot end is a tiptoe hanging duration or a heel hanging duration. As a heel and a tiptoe move in a mutual dragging mode, a trajectory represented within a duration t1 in Fig. 6 is a duration of a tiptoe hanging trajectory from tiptoe lifting-off to heel touching-down, a trajectory represented by a duration t1 in Fig. 7 is also a duration of a heel hanging trajectory from tiptoe lifting-off to heel touching-down, and the tiptoe hanging trajectory and the heel hanging trajectory proceed at the same time, the tiptoe hanging duration and the heel hanging duration are the same and are both t1.

A duration between the heel touching-down moment $t_{e2}$ and the tiptoe touching-down moment $t_{e1}$ is t2 in Table 2 and Table 3, and this duration may be understood as a touching-down duration needed by touching-down of the heel.

Referring to Fig. 8, a line shown in Fig. 8 is a shank joint between a knee and the foot end of the robot, taking the shank joint as an example, the robot will ascend and descend together with the shank joint within the single-foot walking duration from lifting-off of the heel of the foot end to touching-down of the heel. Thus an ascending stage and a descending stage of the shank joint are produced. The ascending stage refers to that a height of the shank joint of the robot will ascend continuously and reach a maximum trunk height, and the descending stage refers to that the height of the shank joint of the robot will descend continuously and reach a minimum trunk height.

Fig. 8 shows that a current state of the shank joint of the robot at the ascending stage includes two standing states, namely a first standing state and a second standing state. The double-sided arrow line in Fig. 8 refers to the trunk height of the shank joint in the first standing state. The second standing state is a state in which the shank joint is at the maximum trunk height, the robot will produce displacements in the direction x and the direction y during walking, assuming that a duration needed in total from ascending to descending of the shank joint of the robot is 1 s, then an ascending duration $(t_1 + t_2 + t_3)/2$ needed by ascending of the shank joint is 0.5 s, and if a duration $t_{cur-start}$ consumed by the robot moving to the first standing state is 0.4 s, then a first target duration consumed by the robot moving from the first standing state to the second standing state is equal to $\frac{t_1+t_2+t_3}{2} - t_{cur-start}$, which is 0.1 s. It can be seen from Fig. 8 that, when the shank joint is in the first standing state at present, a projection length of a trunk length of the shank joint on the ground is equal to a speed of the robot in the first standing state multiplying by a duration that the robot passes from the first standing state to the second standing state, while the first displacement is the projection length of the trunk length of the shank joint on the ground. Thus the first displacement is equal to the speed of the robot in the first standing state multiplying by the duration 0.1 s that the robot passes from the first standing state to the second standing state.

Thus, in the disclosure, the first target duration 0.1 s needed by the robot moving from the first standing state to the second standing state is obtained by subtracting a current duration 0.4 s used by the shank joint to move to the first standing state from an ascending duration 0.5 s. Then the projection length of the trunk length on the ground when the shank joint is in the first standing state is obtained by multiplying the first target duration by the speed of the shank joint in the first standing state, while the projection length of the trunk length of the shank joint on the ground is the first displacement which the robot passes at present, and the first displacement includes the displacement in the direction x and the displacement in the direction y. Fig. 8 shows how to calculate the displacement in the direction x, and a principle of calculating the displacement in the direction y is the same as a principle of calculating the displacement in the direction x, which is not repeated here.

In formula (1), as a trunk of the robot is at the ascending stage and the current duration which the robot passes is less than half of the single-foot walking duration, the first target duration is obtained by subtracting the current duration from half of the single-foot walking duration.

After the first displacement is obtained, the ascending trunk height may be obtained by calculation according to the following formula (2):

$$H = H_{ground} + \sqrt{H_{command}^2 - H_{adjust\_scale} * (x^2 + y^2)} \quad (2)$$

In formula (2), $H$ is the ascending trunk height; $H_{ground}$ is a ground height, which refers to a vertical distance between the ground and a certain reference point; $H_{command}$ is a trunk length, such as the length of the shank joint, and the trunk length is constant; $H_{adjust\_scale}$ is a displacement correction coefficient; and $x$ and $y$ are first displacements.

Referring to Fig. 9, continuing to take the shank joint of the robot as an example, after the displacements in the direction x and the direction y of the shank joint are obtained, the projection length of the trunk length represented by black dotted lines as shown in Fig. 9 may be obtained according to the displacement in the direction x and the displacement in the direction y of the shank joint. Then a target difference is obtained by subtracting a square of the projection length from a square of the trunk length of the shank joint by means of the Pythagorean theorem, and finally the trunk height of the shank joint in the first standing state (i.e., a height in a direction z of the shank joint) is obtained by performing extraction of square root on the target difference.

Since the projection length $x^2 + y^2$ of the trunk length on the ground is a projection length in an ideal state, the projection length needs to be corrected by means of the displacement correction coefficient $H_{adjust\_scale}$ so as to make a corrected projection length closer to an actual projection length of the trunk length on the ground.

It may be understood that, in the process of obtaining the ascending trunk height, the shank joint of the robot is used as an example, but the included method is also applicable to an overall trunk height of the robot.

(2) As for the descending trunk height of the robot, a first displacement which the robot passes at present may be obtained according to a walking speed of the robot, a duration of a single-foot walking attitude of the robot and a current duration of a current motion of the robot; and the descending trunk height is obtained according to the first displacement and the trunk length of the robot.

It is assumed that the heel lifting-off moment $t_{s2}$ of the foot end of the robot is taken as a starting moment of the single-foot walking duration and the tiptoe touching-down moment $t_{e1}$ of the foot end is taken as an ending moment of the single-foot walking duration. A second target duration may be obtained by subtracting half of the single-foot walking duration from a current duration experienced by the robot moving from a starting state of the single-foot walking attitude to a current state. Then a product of the second target duration and the walking speed is taken as the first displacement. Finally, the descending trunk height is obtained according to the first displacement and the trunk length of the robot.

For example, the first displacement may be obtained through the following formula (3), and the first displacement includes a displacement in a direction x and a displacement in a direction y of the robot:

$$x = v_x * (t_{cur-start} - (t_1 + t_2 + t_3)/2)$$

$$y = v_y * (t_{cur-start} - (t_1 + t_2 + t_3)/2) \quad (3)$$

In formula (3), $x$ is the displacement in the direction x of the robot, and $y$ is the displacement in the direction y of the robot; $(t_1 + t_2 + t_3)/2$ is half of the single-foot walking duration; $(t_1 + t_2 + t_3)$ is the single-foot walking duration which the robot passes, which may also be understood as a duration from the heel lifting-off moment to the tiptoe touching-down moment of a single foot end of the robot; $v_x$ is a walking speed in the direction x of the robot; $v_y$ is a walking speed in the direction y of the robot; and $t_{cur-start}$ is the current duration experienced by the robot moving from the starting state to the current state.

Since the robot has moved to the descending stage and the current duration which the robot passes at present is greater than half of the single-foot walking duration, the second target duration may be obtained by subtracting half of the single-foot walking duration from the current duration, and the second target duration is a duration needed by the robot moving from the current state to the ending state of the single-foot walking attitude.

After the first displacement is obtained, the descending trunk height may be obtained by inputting the first displacement into formula (2).

(3) As for the minimum trunk height of the robot, a second displacement which the robot passes at present may be obtained according to a walking speed of the robot and a single-foot walking duration of the robot executing a single-foot walking attitude; and the minimum trunk height is obtained according to the second displacement and the trunk length of the robot.

A product of the walking speed and half of the single-foot walking duration may be taken as the second displacement. Then the minimum trunk height is obtained according to the second displacement and the trunk length of the robot.

For example, the second displacement may be obtained through the following formula (4), and the second displacement includes a displacement in a direction x of the robot and a displacement in a direction y of the robot:

$$x = v_x * (t_1 + t_2 + t_3)/2$$

$$y = v_y * (t_1 + t_2 + t_3)/2 \quad (4)$$

In formula (4), x is the displacement in the direction x of the robot, and y is the displacement in the direction y of the robot; $(t_1 + t_2 + t_3)/2$ is half of the single-foot walking duration; $(t_1 + t_2 + t_3)$ is the single-foot walking duration which the robot passes; $v_x$ is a walking speed in the direction x of the robot; and $v_y$ is a walking speed in the direction y of the robot.

After the second displacement is obtained, the minimum trunk height may be obtained by substituting the second displacement into formula (2).

(4) As for the maximum trunk height of the robot, the maximum trunk height may be obtained according to the ground height and the trunk length.

A sum of the ground height and the trunk length may be used as the maximum trunk height, which is obtained through the following formula (5):

$$H = H_{ground} + H_{command} \quad (5)$$

In formula (5), H is the maximum trunk height; $H_{ground}$ is the ground height; and $H_{command}$ is the trunk length.

Returning to FIG. 15, in step S22, the motion moment corresponding to the trunk height is determined according to the single-foot walking duration of the robot executing the single-foot walking attitude. The motion moment includes a motion moment corresponding to the ascending trunk height, a motion moment corresponding to the descending trunk height, a motion moment corresponding to the minimum trunk height and a motion moment corresponding to the maximum trunk height.

As for the motion moment corresponding to the ascending trunk height, since the ascending trunk height is at the ascending stage, the motion moment corresponding to the ascending trunk height is ought to be within a time range from the motion moment corresponding to the minimum trunk height to the motion moment corresponding to the maximum trunk height of the robot, and by mapping to the foot end of the robot, referring to Fig. 7, the motion moment corresponding to the ascending trunk height is ought to be prior to a midpoint moment of the single-foot walking duration.

As for the motion moment corresponding to the descending trunk height, since the descending trunk height is at the descending stage, the motion moment corresponding to the descending trunk height is ought to be within a time range from the motion moment corresponding to the maximum trunk height to the motion moment corresponding to the minimum trunk height of the robot, and by mapping to the foot end of the robot, referring to Fig. 7, the motion moment corresponding to the descending trunk height is ought to be after the midpoint moment of the single-foot walking duration.

The motion moment corresponding to the minimum trunk height may be the midpoint moment of the single-foot walking duration.

The motion moment corresponding to the maximum trunk height may also be the midpoint moment of the single-foot walking duration.

In step S23 in FIG. 15, a trunk motion trajectory of the robot is determined based on a correspondence relationship between the trunk height and the motion moment.

After the trunk heights at different motion moments at the target gait of the robot are obtained, namely the ascending trunk height corresponding to the motion moment at the ascending stage of the robot, the descending trunk height corresponding to the motion moment at the descending stage, the maximum trunk height and the minimum trunk height of the robot, a trunk motion trajectory at the target gait may be planned based on the trunk heights at the different motion moments.

In step S24, the trunk of the robot is controlled to move with the trunk motion trajectory at the target gait.

By means of the above technical solution, respective trunk heights of the robot at the target gait may be planned first, and then the motion moments corresponding to the respective trunk heights are planned. Finally the robot is controlled to move with the trunk motion trajectory based on trunk motion trajectories under the trunk heights at the different motion moments. In this process, since the trunk motion trajectory of the robot at the target gait changes in a curve and its trunk motion trajectory is similar to a trunk motion trajectory of walking of a human, trunk motions during walking of the robot are higher in natural property and lower in mechanical property.

An example involved in step S 11 to step S14 is introduced below, and as the motion height includes the foot end height, this example is used to explain how to obtain a more anthropomorphic foot end motion trajectory.

Fig. 16 is a flow diagram of another method for controlling motion illustrated according to an example, as shown in Fig. 16, the method includes steps S31-S34.

In step S31, the foot end height is obtained according to at least one of a foot end touching-down height, a foot end lifting-off height or a maximum foot end swing height of the robot.

As for the first gait of advancing and the second gait of backward walking or stepping, the foot end height may be obtained according to at least one of the foot end touching-down height, the foot end lifting-off height or the maximum foot end swing height. For example, a maximum value between the foot end touching-down height and the foot end lifting-off height may be screened out, and then a sum of the maximum value and the maximum foot end swing height is used as a maximum foot end height.

As for the first gait of advancing and the second gait of backward walking or stepping, a minimum foot end height may be obtained according to the foot end touching-down height or the foot end lifting-off height, for example, at a foot end ascending stage, the foot end lifting-off height may be used as the minimum foot end height, and at a foot end descending stage, the foot end touching-down height may be used as the minimum foot end height.

The maximum foot end swing height includes a maximum tiptoe swing height and a maximum heel swing height.

In step S32, a motion moment corresponding to the foot end height is determined.

As for the first gait of advancing, the maximum foot end height includes a maximum tiptoe height and a maximum heel height at the first gait. A motion moment corresponding to the maximum tiptoe height may be obtained according to a tiptoe lifting-off moment of the robot at the first gait and a hanging duration of the robot executing a foot end hanging attitude. A motion moment corresponding to the maximum heel height may be obtained according to a heel touching-down moment of the robot at the first gait and the hanging duration of the robot executing the foot end hanging attitude. The foot end hanging attitude includes a tiptoe hanging attitude and a heel hanging attitude at the first gait.

As for the second gait of backward walking or stepping, the maximum foot end height includes a maximum tiptoe height and a maximum heel height at the second gait. A motion moment corresponding to the maximum tiptoe height may be obtained according to a tiptoe lifting-off moment and a tiptoe touching-down moment of the robot at the second gait; and a motion moment corresponding to the maximum heel height may be obtained according to a heel lifting-off moment and a heel touching-down moment of the robot at the second gait. A foot end hanging attitude includes a tiptoe hanging attitude and a heel hanging attitude at the second gait.

In step S33, a foot end motion trajectory of the robot is determined based on a correspondence relationship between the foot end height and the motion moment.

In step S34, the foot end of the robot is controlled to move with the foot end motion trajectory.

When the foot end motion trajectory is obtained by design, as the robot has different foot end motion trajectories at the first gait of advancing and the second gait of backward walking or stepping, the foot end motion trajectories of foot end height change of the robot will be explained by virtue of foot end heights in two different motion trajectories at the first gait and the second gait.

(1) At the first gait of advancing of the foot end, as the foot end of the robot does an associated motion by a tiptoe and a heel at the first gait, the foot end motion trajectories of the foot end will be described respectively by adopting two forms, namely the tiptoe and the heel.

First form, the foot end includes the tiptoe, the foot end motion trajectories include a tiptoe advancing trajectory, and obtaining the tiptoe motion trajectory includes: screening a maximum value from the tiptoe touching-down height and the tiptoe lifting-off height, and then using a sum of the maximum value and the maximum tiptoe swing height as the maximum tiptoe height; and then obtaining the motion moment corresponding to the maximum tiptoe height according to the tiptoe lifting-off moment of the robot at the first gait and the hanging duration of the robot executing the foot end hanging attitude.

Among them, the form of tiptoe includes curve parameters at the ascending stage and curve parameters at the descending stage.

Referring to Table 4 below, Table 4 shows the curve parameters at the ascending stage during advancing of the tiptoe.

Table 4

|  | Moment | Height | Speed |
|---|---|---|---|
| Start point | $t_{s1}$ | $H_{lift\_off}$ | $v_{lift\_off}$ |

(continued)

|  | Moment | Height | Speed |
|---|---|---|---|
| End point | $t_{s1} + S_F * t_1$ | $H_{max} = max(H_{lift\_off}, H_{touch\_down}) + H_{F\_toe}$ | 0 |

Referring to Table 4 and Fig. 6, in Table 4, $t_{s1}$ is a tiptoe lifting-off moment during advancing of the tiptoe, and the tiptoe lifting-off moment is a moment when the tiptoe lifts off; $H_{lift\_off}$ is a tiptoe lifting-off height during advancing of the tiptoe, and the tiptoe lifting-off height is a height when the tiptoe lifts off; $v_{lift\_off}$ is a tiptoe lifting-off speed during advancing of the tiptoe, and the tiptoe lifting-off speed is a speed when the tiptoe lifts off; $t_{s1} + S_F * t_1$ is a motion moment corresponding to the maximum tiptoe height during advancing of the tiptoe, which may also be understood as a moment when the tiptoe swings to the maximum tiptoe height during advancing; $H_{max} = max(H_{lift\_off}, H_{touch\_down}) + H_{F\_toe}$ is a maximum tiptoe height during advancing of the tiptoe; and speed 0 refers to a speed at the maximum tiptoe height during advancing of the tiptoe.

Referring to Table 5 below, Table 5 shows the curve parameters at the descending stage of advancing of the tiptoe.

Table 5

|  | Moment | Height | Speed |
|---|---|---|---|
| Start point | $t_{s1} + S_F * t_1$ | $H_{max} = max(H_{lift\_off}, H_{touch\_down}) + H_{F\_toe}$ | 0 |
| End point | $t_{e1}$ | $H_{touch\_down}$ | $v_{touch\_down}$ |

Referring to Table 5 and Fig. 6, $t_{s1} + S_F * t_1$ is a motion moment corresponding to the maximum tiptoe height during advancing of the tiptoe; $H_{max} = max(H_{lift\_off}, H_{touch\_down}) + H_{F\_toe}$ is the maximum tiptoe height during advancing of the tiptoe; speed 0 refers to a speed at the maximum tiptoe height during advancing of the tiptoe; $t_{e1}$ is a tiptoe touching-down moment during advancing of the tiptoe, and the tiptoe touching-down moment is a moment when the tiptoe touches down during advancing of the tiptoe; $H_{touch\_down}$ is the tiptoe touching-down height during advancing of the tiptoe, and the tiptoe touching-down height is a height when the tiptoe touches down during advancing of the tiptoe; and $v_{touch\_down}$ is a tiptoe touching-down speed during advancing of the tiptoe, and the tiptoe touching-down speed is a speed when the tiptoe touches down.

In Table 4 and Table 5 above, as for the maximum tiptoe height, the maximum value in the tiptoe lifting-off height and the tiptoe touching-down height is determined first; and then the sum of the maximum value and the maximum tiptoe swing height of the tiptoe is used as the maximum tiptoe height, and a calculation formula of the maximum tiptoe height is as follows:

$$H_{max} = max(H_{lift\_off}, H_{touch\_down}) + H_{F\_toe} \qquad (6)$$

In formula (6), $H_{max}$ is the maximum tiptoe height during advancing of the tiptoe; $H_{lift\_off}$ is the tiptoe lifting-off height during advancing of the tiptoe; $H_{touch\_down}$ is the tiptoe touching-down height during advancing; and $H_{F\_toe}$ is the maximum tiptoe swing height during advancing of the tiptoe.

In Table 4 and Table 5, as for the motion moment corresponding to the maximum tiptoe height, the motion moment corresponding to the maximum tiptoe height is obtained according to a corrected tiptoe hanging duration and a tiptoe lifting-off moment, where the corrected tiptoe hanging duration is obtained by correcting a tiptoe hanging duration using a first correction coefficient.

Referring to Fig. 6, it shows a curve graph of a single foot end of the robot executing the single-foot walking attitude. Referring to the curve graph, during walking of the foot end of the robot, the heel lifts off first and then the tiptoe lifts off, the whole foot end is in a hanging state after the tiptoe lifts off, and afterwards, the heel touches down first and then the tiptoe touches down.

Referring to Fig. 6, the corrected tiptoe hanging duration is obtained by correcting the tiptoe hanging duration using the first correction coefficient in the disclosure, and then the motion moment corresponding to the maximum tiptoe height is obtained according to the corrected tiptoe hanging duration and the tiptoe lifting-off moment, which is expressed through the following formula (7):

$$T1 = t_{s1} + S_F * t_1 \quad (7)$$

In formula (7), $T1$ is the motion moment corresponding to the maximum tiptoe height; $t_{s1}$ is the tiptoe lifting-off moment during advancing of the tiptoe; $S_F$ is the first correction coefficient which is greater than 0 and less than 1; and $t_1$ is the hanging duration of the foot end, namely the tiptoe hanging duration during advancing of the tiptoe.

It can be seen from formula (7) that, a product of the first correction coefficient and the tiptoe hanging duration is used as the corrected tiptoe hanging duration, then a sum of the corrected tiptoe hanging duration and the tiptoe lifting-off moment is used as the motion moment corresponding to the maximum tiptoe height, and a reason for such design is as follows:

If the sum of the tiptoe lifting-off moment $t_{s1}$ and the tiptoe hanging duration $t_1$ is directly used as the motion moment corresponding to the maximum tiptoe height without correcting the tiptoe hanging duration using the first correction coefficient, it can be seen from Fig. 6 that, an actual motion moment corresponding to the maximum tiptoe height is in front of a calculated motion moment corresponding to the maximum tiptoe height, and it is not correct to make the motion moment calculated at this time correspond to the maximum tiptoe height. Thus, the tiptoe hanging duration may be corrected using the first correction coefficient, the corrected tiptoe hanging duration much smaller than the tiptoe hanging duration is added on the basis of the tiptoe lifting-off moment. Thus, the motion moment corresponding to the maximum tiptoe height obtained after correction can be more ahead of the motion moment corresponding to the maximum tiptoe height obtained without adding the first correction coefficient, and then the correspondence relationship between the motion moment and the maximum tiptoe height can be accurate.

By obtaining the tiptoe lifting-off height corresponding to the tiptoe lifting-off moment of the tiptoe, the maximum tiptoe height of the tiptoe and the tiptoe touching-down height corresponding to the tiptoe touching-down moment of the tiptoe, walking states of the tiptoe at three key positions can be obtained, and tiptoe advancing trajectories as shown in Fig. 6 and Fig. 7 are drawn.

Second form, the foot end includes the heel, the foot end motion trajectories include a heel advancing trajectory, and obtaining the foot end motion trajectories includes: screening a maximum value from the heel touching-down height and the heel lifting-off height. Then using a sum of the maximum value and the maximum heel swing height as the maximum heel height; and then obtaining the motion moment corresponding to the maximum heel height according to the heel lifting-off moment of the robot at the first gait and the hanging duration of the robot executing the foot end hanging attitude.

Among them, the form of heel includes curve parameters at the ascending stage and curve parameters at the descending stage.

Referring to Table 6 below, Table 6 shows the curve parameters at the ascending stage of advancing of the heel.

Table 6

| | Moment | Height | Speed |
|---|---|---|---|
| Start point | $t_{s2}$ | $H_{lift\_off}$ | $v_{lift\_Off}$ |
| End point | $t_{e2} - S_F * t_1$ | $H_{max} = max(H_{lift\_off}, H_{touch\_down}) + H_{F\_heel}$ | 0 |

Referring to Table 6 and Fig. 6, in Table 6, $t_{s2}$ is a heel lifting-off moment during advancing of the heel, and the heel lifting-off moment is a moment when the heel lifts off; $H_{lift\_off}$ is a heel lifting-off height during advancing of the heel, and the heel lifting-off height is a height when the heel lifts off; $v_{lift\_off}$ is a heel lifting-off speed during advancing of the heel, and the heel lifting-off speed is a speed when the heel lifts off; $t_{e2} - S_F * t_1$ is a motion moment corresponding to the maximum heel height during advancing of the heel, which may also be understood as a moment when the heel swings to the maximum heel height; $H_{max} = max(H_{lift\_off}, H_{touch\_down}) + H_{F\_heel}$ is a maximum heel height during advancing of the heel; and speed 0 refers to a speed at the maximum heel height during advancing of the heel.

Referring to Table 7 below, Table 7 shows the curve parameters at the descending stage of advancing of the heel.

Table 7

| | Moment | Height | Speed |
|---|---|---|---|
| Start point | $t_{e2} - S_F * t_1$ | $H_{max} = max(H_{lift\_off}, H_{touch\_down}) + H_{F\_heel}$ | 0 |
| End point | $t_{e2}$ | $H_{touch\_down}$ | $v_{touch\_down}$ |

Referring to Table 7 and Fig. 6, in Table 7, $t_{e2} - S_F * t_1$ is a motion moment corresponding to the maximum heel height during advancing of the heel; $H_{max} = max(H_{lift\_off}, H_{touch\_down}) + H_{F\_heel}$ is the maximum heel height during advancing of the heel; speed 0 refers to a speed at the maximum heel height during advancing of the heel; $t_{e2}$ is a heel touching-down moment during advancing of the heel, and the heel touching-down moment is a moment when the heel touches down; $H_{touch\_down}$ is the heel touching-down height during advancing of the heel, and the heel touching-down height is a height when the heel touches down; and $v_{touch\_down}$ is a heel touching-down speed during advancing of the heel, and the heel touching-down speed is a speed when the heel touches down.

In Table 6 and Table 7, as for the maximum heel height, the maximum value between the heel lifting-off height and the heel touching-down height is determined first; and then the sum of the maximum value and the maximum heel swing height of the heel is used as the maximum heel height, and a calculation formula of the maximum heel height is as follows:

$$H_{max} = max(H_{lift\_off}, H_{touch\_down}) + H_{F\_heel} \quad (8)$$

In formula (8), $H_{max}$ is the maximum heel height during advancing of the heel; $H_{lift\_off}$ is the heel lifting-off height during advancing of the heel; $H_{touch\_down}$ is the heel touching-down height during advancing of the heel; and $H_{F\_heel}$ is the maximum heel swing height during advancing of the heel.

In Table 6 and Table 7 above, as for the motion moment corresponding to the maximum heel height, the motion moment corresponding to the maximum heel height is obtained according to a corrected heel hanging duration and the heel touching-down moment, where the corrected heel hanging duration is obtained by correcting a heel hanging duration using a second correction coefficient, which is expressed through the following formula (9):

$$T2 = t_{e2} - S_F * t_1 \quad (9)$$

In formula (9), $T2$ is the motion moment corresponding to the maximum heel height; $t_{e2}$ is the heel touching-down moment during advancing of the heel; $S_F$ is the second correction coefficient which is greater than 0 and less than 1; and $t_1$ is the hanging duration of the foot end during advancing of the heel, namely the heel hanging duration during advancing of the heel.

It can be seen from formula (9) that, a product of the second correction coefficient and the heel hanging duration is used as the corrected heel hanging duration, then a difference of subtracting the corrected heel hanging duration from the heel touching-down moment is used as the motion moment corresponding to the maximum heel height, and a reason for such design is as follows:

If the difference of subtracting the heel hanging duration $t_1$ from the heel touching-down moment $t_{e2}$ is directly used as the motion moment corresponding to the maximum heel height without correcting the heel hanging duration using the second correction coefficient, it can be seen from Fig. 7 that, an actual motion moment corresponding to the maximum heel height is more behind a calculated motion moment, and it is not correct to make the motion moment calculated at this time correspond to the maximum heel height. Thus, the heel hanging duration may be corrected using the second correction coefficient, the corrected heel hanging duration much smaller than the heel hanging duration is subtracted on the basis of the heel touching-down moment. Therefore, the motion moment obtained after correction can be more behind the motion moment obtained without adding the second correction coefficient, and thus the correspondence relationship between the maximum heel height and the motion moment is more accurate.

By obtaining the heel lifting-off height corresponding to the heel lifting-off moment, the maximum heel height of the heel and the heel touching-down height corresponding to the heel touching-down moment, walking states of the heel at three key positions can be obtained, and heel advancing trajectories as shown in Fig. 6 and Fig. 7 are drawn.

(2) At the second gait of backward walking or stepping of the foot end, as the foot end of the robot does an associated motion by the tiptoe and the heel at the second gait, the foot end motion trajectories of the foot end will be described respectively by adopting two forms, namely the tiptoe and the heel. A backward walking trajectory includes a stepping trajectory or a reverse walking trajectory of the foot end of the robot, which are consistent, and thus states of the two same trajectories are described uniformly with the backward walking trajectory.

First form, the foot end includes the tiptoe, the foot end motion trajectories include a tiptoe backward walking trajectory, and obtaining the tiptoe backward walking trajectory includes: screening a maximum value from the tiptoe touching-down height and the tiptoe lifting-off height, and then using a sum of the maximum value and the maximum tiptoe swing height as the maximum tiptoe height. Then obtaining the motion moment corresponding to the maximum tiptoe height according to the tiptoe lifting-off moment of the robot at the second gait and the hanging duration of the robot executing the foot end hanging attitude.

Among them, the form of tiptoe includes curve parameters at the ascending stage and curve parameters at the descending stage.

Referring to Table 8 below, Table 8 shows the curve parameters at the ascending stage of backward walking of the tiptoe.

Table 8

|  | Moment | Height | Speed |
|---|---|---|---|
| Start point | $t_{s3}$ | $H_{lift\_off}$ | $v_{lift\_off}$ |
| End point | $t_{s3} + (t_{e3} - t_{s3})/2$ | $H_{max}$ $= max(H_{lift\_off}, H_{touch\_down})$ $+ H_{B\_toe}$ | 0 |

Referring to Table 8 and Fig. 11, in Table 8, $t_{s3}$ is a tiptoe lifting-off moment during backward walking of the tiptoe; $H_{lift\_off}$ is a tiptoe lifting-off height during backward walking of the tiptoe; $v_{lift\_off}$ is a tiptoe lifting-off speed during backward walking of the tiptoe; $t_{s3} + (t_{e3} - t_{s3})/2$ is a motion moment corresponding to the maximum tiptoe height during backward walking of the tiptoe, which is also a corresponding moment when the tiptoe swings to the maximum tiptoe height during backward walking; $H_{max} = max(H_{lift\_off}, H_{touch\_down}) + H_{B\_toe}$ is a maximum tiptoe height during backward walking of the tiptoe; and speed 0 refers to a speed when the tiptoe moves to the maximum tiptoe height during backward walking of the tiptoe.

Referring to Table 9 below, Table 9 shows the curve parameters at the descending stage of backward walking of the tiptoe.

Table 9

|  | Moment | Height | Speed |
|---|---|---|---|
| Start point | $t_{s3} + (t_{e3} - t_{s3})/2$ | $H_{max} = max(H_{lift\_off}, H_{touch\_down}) + H_{B\_toe}$ | 0 |
| End point | $t_{e3}$ | $H_{touch\_down}$ | $v_{touch\_down}$ |

Referring to Table 9 and Fig. 11, in Table 9, $t_{s3} + (t_{e3} - t_{s3})/2$ is a motion moment corresponding to the maximum tiptoe height; $H_{max} = max(H_{lift\_off}, H_{touch\_down}) + H_{B\_toe}$ is the maximum tiptoe height during backward walking of the tiptoe; speed 0 refers to a speed when the tiptoe moves to the maximum tiptoe height during backward walking of the tiptoe; $t_{e3}$ is a tiptoe touching-down moment during backward walking of the tiptoe; $H_{touch\_down}$ is the tiptoe touching-down height during backward walking of the tiptoe; and $v_{touch\_down}$ is a tiptoe touching-down speed during backward walking of the tiptoe.

In Table 8 and Table 9, as for the maximum tiptoe height of the tiptoe, the maximum value in the tiptoe lifting-off height and the tiptoe touching-down height is determined first, then the sum of the maximum value and the maximum tiptoe swing height of the tiptoe is used as the maximum tiptoe height of the tiptoe, and a calculation formula of the maximum tiptoe height is as follows:

$$H_{max} = max(H_{lift\_off}, H_{touch\_down}) + H_{B\_toe} \quad (10)$$

In formula (10), $H_{max}$ is the maximum tiptoe height during backward walking of the tiptoe; $H_{lift\_off}$ is a lifting-off height during backward walking of the tiptoe; $H_{touch\_down}$ is the tiptoe touching-down height during backward walking of the tiptoe; and $H_{B\_toe}$ is the maximum tiptoe swing height during backward walking of the tiptoe.

In Table 8 and Table 9, as for the motion moment corresponding to the maximum tiptoe height, the motion moment corresponding to the maximum tiptoe height is obtained by using half of a difference of subtracting the tiptoe touching-down moment from the tiptoe lifting-off moment during backward walking, namely the tiptoe hanging duration, as a third target duration and then adding the third target duration on the basis of the tiptoe lifting-off moment, and a calculation formula of the motion moment is as follows:

$$T3 = t_{s3} + (t_{e3} - t_{s3})/2 \quad (11)$$

In formula (11), $T3$ is the motion moment corresponding to the maximum tiptoe height; $t_{s3}$ is the tiptoe lifting-off moment during backward walking of the tiptoe; and $t_{e3}$ is a tiptoe touching-down moment during backward walking of the tiptoe.

Table 8 and Table 9 show the curve parameters of the tiptoe during backward walking, actually, curve parameters of the tiptoe during stepping are the same as the tiptoe height change during backward walking, but the two have different motion trajectories after planning, referring to the motion trajectory of backward walking shown in Fig. 11 and the motion trajectory of stepping shown in Fig. 12, they are different.

By obtaining the tiptoe lifting-off height at the tiptoe lifting-off moment of the tiptoe, the maximum tiptoe height of the tiptoe and the tiptoe touching-down height at the tiptoe touching-down moment of the tiptoe, walking states of backward walking of the tiptoe at three key positions can be obtained, and tiptoe backward walking trajectories as shown in Fig. 11 and Fig. 12 are drawn.

Second form, the foot end includes the heel, the foot end motion trajectories include a heel backward walking trajectory, and obtaining the heel backward walking trajectory includes: screening a maximum value from the heel touching-down height and the heel lifting-off height, and then using a sum of the maximum value and the maximum heel swing height as the maximum heel height. Then obtaining the motion moment corresponding to the maximum heel height according to the heel lifting-off moment of the robot at the second gait and the hanging duration of the robot executing the foot end hanging attitude.

Among them, the form of heel includes curve parameters at the ascending stage and curve parameters at the descending stage.

Referring to Table 10 below, Table 10 shows the curve parameters at the ascending stage during backward walking of the heel.

Table 10

|  | Moment | Height | Speed |
|---|---|---|---|
| Start point | $t_{s4}$ | $H_{lift\_off}$ | $v_{lift\_off}$ |
| End point | $t_{s4} + (t_{e4} - t_{s4})/2$ | $H_{max} = max(H_{lift\_off}, H_{touch\_down}) + H_{B\_heel}$ | 0 |

Referring to Table 10 and Fig. 11, in Table 10, $t_{s4}$ is a heel lifting-off moment during backward walking; $H_{lift\_off}$ is a heel lifting-off height during backward walking; $v_{lift\_off}$ is a heel lifting-off speed during backward walking; $t_{s4} + (t_{e4} - t_{s4})/2$ is a motion moment corresponding to the maximum heel height, which is also a corresponding moment when the heel swings to the maximum heel height; $H_{max} = max(H_{lift\_off}, H_{touch\_down}) + H_{B\_heel}$ is the maximum heel height; and speed 0 refers to a speed when the heel moves to the maximum heel height.

Referring to Table 11 below, Table 11 shows the curve parameters at the descending stage during backward walking of the heel.

Table 11

|  | Moment | Height | Speed |
|---|---|---|---|
| Start point | $t_{s4} + (t_{e4} - t_{s4})/2$ | $H_{max} = max(H_{lift\_off}, H_{touch\_down}) + H_{B\_heel}$ | 0 |
| End point | $t_{e4}$ | $H_{touch\_down}$ | $v_{touch\_down}$ |

Referring to Table 11 and Fig. 11, in Table 11, $t_{s4} + (t_{e4} - t_{s4})/2$ is a motion moment corresponding to the maximum heel height; $H_{max} = max(H_{lift\_off}, H_{touch\_down}) + H_{B\_heel}$ is the maximum heel height; speed 0 refers to a speed when the heel moves to the maximum heel height; $t_{e4}$ is a heel touching-down moment during backward walking; $H_{touch\_down}$ is the heel touching-down height during backward walking; and $v_{lift\_off}$ is a heel touching-down speed during backward walking.

In Table 10 and Table 11, as for the maximum heel height, the maximum value between the heel lifting-off height and the heel touching-down height is determined first; and then the sum of the maximum value and the maximum heel swing height of the heel is used as the maximum heel height, and a calculation formula of the maximum heel height is as follows:

$$H_{max} = max(H_{lift\_off}, H_{touch\_down}) + H_{B\_heel} \quad (12)$$

In formula (12), $H_{max}$ is the maximum heel height during backward walking of the heel; $H_{lift\_off}$ is the heel lifting-off height during backward walking of the heel; $H_{touch\_down}$ is the heel touching-down height during backward walking of the heel; and $H_{F\_heel}$ is the maximum heel swing height of the heel.

In Table 10 and Table 11, as for the motion moment corresponding to the maximum heel height, the motion moment corresponding to the maximum heel height is obtained by using half of a difference of subtracting the heel touching-down moment from the heel lifting-off moment during backward walking, namely the heel hanging duration, as a fourth target duration and then adding the fourth target duration on the basis of the heel lifting-off moment, and a calculation formula of the motion moment is as follows:

$$T4 = t_{s4} + (t_{e4} - t_{s4})/2 \quad (13)$$

In formula (13), $T4$ is the motion moment corresponding to the maximum heel height; $t_{s4}$ is the heel lifting-off moment during backward walking of the heel; and $t_{e3}$ is the heel touching-down moment during backward walking of the heel.

Table 10 and Table 11 above show the curve parameters of the heel during backward walking, actually, curve parameters of the heel during stepping are the same as the curve parameters during backward walking, but the two have different motion trajectories after planning, referring to the motion trajectory of backward walking shown in Fig. 11 and the motion trajectory of stepping shown in Fig. 12, they are different.

By obtaining the heel lifting-off height at the heel lifting-off moment of the heel, the maximum heel height of the heel and the heel touching-down height at the heel touching-down moment of the heel, walking states of backward walking of the heel at three key positions can be obtained, and heel backward walking trajectories as shown in Fig. 11 and Fig. 12 are drawn.

After the process of designing the foot end advancing trajectories, the maximum tiptoe height of the tiptoe may further be set to be lower than the maximum heel height of the heel, referring to Fig. 11 or Fig. 12, the maximum tiptoe height of the tiptoe is apparently lower than the maximum heel height of the heel, and thus a backward walking gait of the robot is made more anthropomorphic.

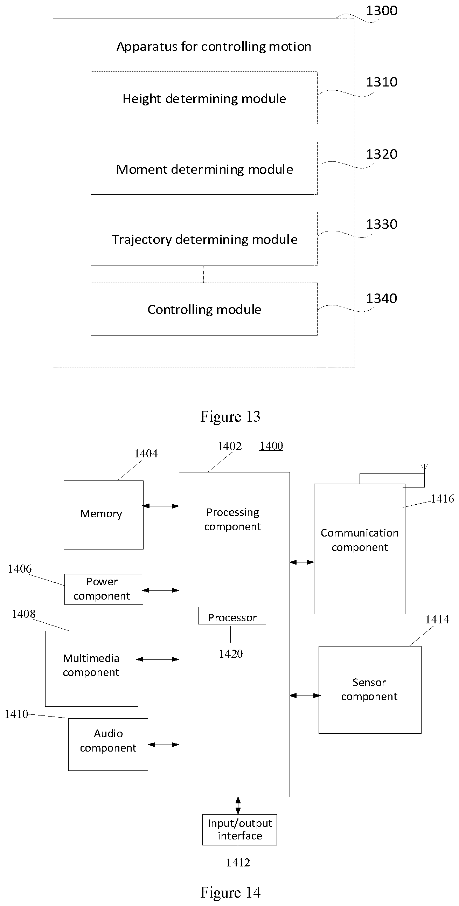

Fig. 13 is a structural block diagram of an apparatus for controlling motion illustrated according to an example. The apparatus for controlling motion 1300 includes: a height determining module 1310, a moment determining module 1320, a trajectory determining module 1330 and a controlling module 1340.

The height determining module 1310 is configured to determine a motion height of a robot at a target gait.

The moment determining module 1320 is configured to determine a motion moment corresponding to the motion height according to durations of different motion attitudes executed by the robot at the target gait.

The trajectory determining module 1330 is configured to determine a motion trajectory of the robot based on a correspondence relationship between the motion height and the motion moment.

The controlling module 1340 is configured to control the robot to move with the motion trajectory.

Optionally, the motion trajectories corresponding to different target gaits are different.

Optionally, the motion height includes a trunk height, and the motion trajectory includes a trunk motion trajectory; and the trajectory determining module 1330 includes:

a first trajectory determining sub-module, configured to determine a trunk motion trajectory of the robot based on a correspondence relationship between the trunk height and the motion moment.

Optionally, the motion height includes an ascending trunk height or a descending trunk height; and the height determining module 1310 includes:

a first displacement determining sub-module, configured to obtain a first displacement which the robot passes at present according to a walking speed of the robot, a single-foot walking duration of the robot executing a single-foot walking attitude and a current duration of a current motion of the robot; and

an ascending-descending trunk height determining sub-module, configured to obtain the ascending trunk height or the descending trunk height according to the first displacement and a trunk length of the robot.

Optionally, the motion height includes a minimum trunk height; and the height determining module 1310 includes:

a second displacement determining sub-module, configured to obtain a second displacement which the robot passes at present according to a walking speed of the robot and a single-foot walking duration of the robot executing a single-foot walking attitude; and

a minimum trunk height determining sub-module, configured to obtain the minimum trunk height according to the second displacement and the trunk length of the robot.

Optionally, the motion attitude includes the single-foot walking attitude, and the motion height includes the trunk height.

Optionally, the moment determining module 1320 includes:

a first motion moment determining sub-module, configured to determine a motion moment corresponding to the trunk height according to a single-foot walking duration of the robot executing the single-foot walking attitude, the single-foot walking attitude being a walking attitude of a single foot end of the robot from lifting-off to touching-down.

Optionally, the motion height includes a foot end height, and the motion trajectory includes a foot end motion trajectory; and the trajectory determining module 1330 includes:

a foot end motion trajectory determining sub-module, configured to determine the foot end motion trajectory of the robot based on a correspondence relationship between the foot end height and the motion moment.

Optionally, the motion height includes a maximum foot end height; and the height determining module 1310 includes:

a maximum foot end height determining sub-module, configured to obtain the maximum foot end height according to a foot end touching-down height, a foot end lifting-off height and a maximum foot end swing height of the robot.

Optionally, the motion height includes a maximum foot end height, the maximum foot end height includes a maximum tiptoe height, and the target gait is a first gait of advancing; and the moment determining module 1320 includes:

a second motion moment determining sub-module, configured to obtain a motion moment corresponding to the maximum tiptoe height according to a tiptoe lifting-off moment of the robot at the first gait and a hanging duration of the robot executing a foot end hanging attitude.

Optionally, the motion height includes the maximum foot end height, the maximum foot end height includes a maximum heel height, and the target gait is the first gait of advancing; and the moment determining module 1320 includes:

a third motion moment determining sub-module, configured to obtain a motion moment corresponding to the maximum heel height according to a heel touching-down moment of the robot at the first gait and a hanging duration of the robot executing a foot end hanging attitude.

Optionally, the motion height includes the maximum foot end height, the maximum foot end height includes the maximum tiptoe height, the target gait is a second gait of backward walking or stepping, and the motion control apparatus 1300 further includes:

a second gait maximum tiptoe height moment module, configured to obtain a motion moment corresponding to the maximum tiptoe height according to a tiptoe lifting-off moment and a tiptoe touching-down moment of the robot at the second gait.

Optionally, the motion height includes the maximum foot end height, the maximum foot end height includes the maximum heel height, the target gait is the second gait of backward walking or stepping, and the motion control apparatus 1300 further includes:

a second gait maximum heel height moment module, configured to obtain a motion moment corresponding to the maximum heel height according to a heel lifting-off moment and a heel touching-down moment of the robot at the second gait.

Optionally, the foot end includes a tiptoe and a heel, and the maximum tiptoe height of the tiptoe is less than the maximum heel height of the heel.

Optionally, the hanging duration of the foot end is greater than a touching-down duration needed by touching-down of the heel.

Optionally, the hanging duration of the foot end is greater than a lifting duration needed by lifting of the tiptoe.

As for the apparatus in the above example, the specific manner in which each module performs operations has been described in detail in the example of the method, which will not be described in detail here.

The disclosure further provides a computer readable storage medium, storing computer program instructions, and the program instructions, when executed by a processor, implement steps of the method for controlling motion provided by the disclosure.

Fig. 14 is a structural block diagram of an apparatus 1400 for motion control illustrated according to an example. For example, the apparatus 1400 may be a smart device such as a robot and a robot dog.

Referring to Fig. 14, the apparatus 1400 may include one or more of the following components: a processing component 1402, a memory 1404, a power component 1406, a multimedia component 1408, an audio component 1410, an input/output interface 1412, a sensor component 1414, and a communication component 1416.

The processing component 1402 typically controls the overall operation of the apparatus 1400, such as operations associated with display, telephone call, data communication, camera operations, and recording operations. The processing component 1402 may include one or more processors 1420 to execute instructions so as to complete all or part of the steps of the above method for controlling motion. In addition, the processing component 1402 may include one or more modules to facilitate interaction between the processing component 1402 and other components. For example, the processing component 1402 may include a multimedia module to facilitate interaction between the multimedia component 1408 and the processing component 1402.

The memory 1404 is configured to store various types of data to support operations on the apparatus 1400. Instances of these data include instructions for any application or method operating on the apparatus 1400, contact data, phonebook data, messages, pictures, videos, etc. The memory 1404 may be implemented by any type of volatile or nonvolatile storage device or their combination, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, and a magnetic disk or optic disk.

The power component 1406 provides power for various components of the apparatus 1400. The power component 1406 may include a power management system, one or more power sources and other components associated with generating, managing and distributing power for the apparatus 1400.

The multimedia component 1408 includes a screen providing an output interface between the apparatus 1400 and a user. In some examples, the screen may include a liquid crystal display (LCD) and a touch panel (TP). If the screen includes the touch panel, the screen may be implemented as a touch screen to receive an input signal from the user. The touch panel includes one or more touch sensors to sense touch, sliding and gestures on the touch panel. The touch sensor can not only sense the boundary of the touch or sliding operation, but also detect the duration and pressure related to the touch or sliding operation. In some examples, the multimedia component 1408 includes a front camera and/or a rear camera. When the apparatus 1400 is in an operation mode, such as a shooting mode or a video mode, the front camera and/or the rear camera can receive external multimedia data. Each front camera and rear camera may be a fixed optical lens system or have a focal length and optical zoom capability.

The audio component 1410 is configured to output and/or input audio signals. For example, the audio component 1410 includes a microphone (MIC) configured to receive an external audio signal when the apparatus 1400 is in the operation mode, such as a call mode, a recording mode, and a speech recognition mode. The received audio signal may be further stored in the memory 1404 or transmitted via the communication component 1416. In some examples, the audio component 1410 further includes a speaker for outputting an audio signal.

The input/output interface 1412 provides an interface between the processing component 1402 and a peripheral interface module which may be a keyboard, a click wheel, a button, etc. These buttons may include but are not limited to: a home button, volume buttons, a start button and a lock button.

The sensor component 1414 includes one or more sensors for providing state evaluation of various aspects of the apparatus 1400. For example, the sensor component 1414 can detect an on/off state of the apparatus 1400 and the relative positioning of the components, for example, the component is a display and a keypad of the apparatus 1400. The sensor component 1414 can also detect the change of the position of the apparatus 1400 or one component of the apparatus 1400, the presence or absence of user contact with the apparatus 1400, the azimuth or acceleration/deceleration of the apparatus 1400, and temperature change of the apparatus 1400. The sensor component 1414 may include a proximity sensor configured to detect the presence of nearby objects without any physical contact. The sensor component 1414 may further include an optical sensor, such as a CMOS or CCD image sensor, for use in imaging applications. In some examples, the sensor component 1414 may further include an acceleration sensor, a gyroscope sensor, a magnetic sensor, a pressure sensor, or a temperature sensor.

The communication component 1416 is configured to facilitate wired or wireless communication between the apparatus 1400 and other devices. The apparatus 1400 may access a wireless network based on a communication standard, such as WiFi, 2G or 3G, or their combination. In an example, the communication component 1416 receives a broadcast signal or broadcast-related information from an external broadcast management system via a broadcast channel. In an example, the communication component 1416 further includes a near field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology and other technologies.

In an example, the apparatus 1400 may be implemented by one or more application-specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements for performing the above method for controlling motion.

In an example, a non-transitory computer-readable storage medium including instructions, such as the memory 1404 including instructions, which can be executed by the processor 1420 of the apparatus 1400 to complete the above method for controlling motion, is also provided. For example, the non-transitory computer readable storage medium may be a ROM, a random access memory (RAM), a CD-ROM, a magnetic tape, a floppy disk, an optical data storage device, etc. The methods described herein may be performed by at least one of the apparatus for controlling motion 1300 or the apparatus 1400. Additionally, the modules 1310, 1320, 1330, and 1340, in the apparatus 1300 may perform the described functions using the structures shown with reference to the apparatus 1400.

In another example, a computer program product is further provided. The computer program product contains a computer program executable by a programmable apparatus. The computer program has a code part which is configured to, when executed by the programmable apparatus, execute the above method for controlling motion.

**Claims**

1. A method for controlling motion, comprising:

   determining (S11) a motion height of a robot at a target gait;
   determining (S12) a motion moment corresponding to the motion height according to durations of different motion attitudes executed by the robot at the target gait;
   determining (S13) a motion trajectory of the robot based on a correspondence relationship between the motion height and the motion moment; and
   controlling (S14) the robot to move with the motion trajectory.

2. The method according to claim 1, wherein the motion height comprises a trunk height, the motion trajectory comprises a trunk motion trajectory, and determining (S13) the motion trajectory of the robot based on the correspondence relationship between the motion height and the motion moment comprises:
   determining the trunk motion trajectory of the robot based on a correspondence relationship between the trunk height and the motion moment.

3. The method according to claim 1 or 2, wherein the motion height comprises an ascending trunk height or a descending trunk height, and determining (S11) the motion height of the robot at the target gait comprises:

   obtaining a first displacement which the robot passes at present according to a walking speed of the robot, a single-foot walking duration of the robot executing a single-foot walking attitude and a current duration of a current motion of the robot; and
   obtaining the ascending trunk height or the descending trunk height according to the first displacement and a trunk length of the robot;
   or;
   the motion height comprises a minimum trunk height, and determining (S11) the motion height of the robot at the target gait comprises:

      obtaining a second displacement which the robot passes at present according to a walking speed of the robot and a single-foot walking duration of the robot executing a single-foot walking attitude; and
      obtaining the minimum trunk height according to the second displacement and a trunk length of the robot.

4. The method according to any one of claims 1-3, wherein the motion attitude comprises a single-foot walking attitude, the motion height comprises a trunk height, and determining (S12) the motion moment corresponding to the motion height according to the durations of the different motion attitudes executed by the robot at the target gait comprises:
   determining a motion moment corresponding to the trunk height according to a single-foot walking duration of the robot executing the single-foot walking attitude, and the single-foot walking attitude being a walking attitude of a single foot end of the robot from lifting-off to touching-down.

5. The method according to any one of claims 1-4, wherein the motion height comprises a foot end height, the motion trajectory comprises a foot end motion trajectory, and determining (S13) the motion trajectory of the robot based on the correspondence relationship between the motion height and the motion moment comprises:
   determining the foot end motion trajectory of the robot based on a correspondence relationship between the foot end height and the motion moment.

6. The method according to any one of claims 1-5, wherein the motion height comprises a maximum foot end height, and determining (S11) the motion height of the robot at the target gait comprises:
   obtaining the maximum foot end height according to a foot end touching-down height, a foot end lifting-off height and a maximum foot end swing height of the robot.

7. The method according to any one of claims 1-6, wherein the motion height comprises a maximum foot end height, the maximum foot end height comprises a maximum tiptoe height, the target gait is a first gait of advancing, and determining (S12) the motion moment corresponding to the motion height according to the durations of the different motion attitudes executed by the robot at the target gait comprises:

   obtaining a motion moment corresponding to the maximum tiptoe height according to a tiptoe lifting-off moment of the robot at the first gait and a hanging duration of the robot executing a foot end hanging attitude;

or;

the motion height comprises a maximum foot end height, the maximum foot end height comprises a maximum heel height, the target gait is a first gait of advancing, and determining (S12) the motion moment corresponding to the motion height according to the durations of the different motion attitudes executed by the robot at the target gait comprises:

obtaining a motion moment corresponding to the maximum heel height according to a heel touching-down moment of the robot at the first gait and a hanging duration of the robot executing a foot end hanging attitude.

8. The method according to any one of claims 1-7, wherein the motion height comprises a maximum foot end height, the maximum foot end height comprises a maximum tiptoe height, the target gait is a second gait of backward walking or stepping, and the method further comprises:
obtaining a motion moment corresponding to the maximum tiptoe height according to a tiptoe lifting-off moment and a tiptoe touching-down moment of the robot at the second gait.

9. The method according to any one of claims 1-7, wherein the motion height comprises a maximum foot end height, the maximum foot end height comprises a maximum heel height, the target gait is a second gait of backward walking or stepping, and the method further comprises:
obtaining a motion moment corresponding to the maximum heel height according to a heel lifting-off moment and a heel touching-down moment of the robot at the second gait.

10. The method according to any one of claims 4-9, wherein the foot end comprises a tiptoe and a heel, and the maximum tiptoe height of the tiptoe is less than the maximum heel height of the heel.

11. The method according to any one of claims 7-10, wherein the hanging duration of the foot end is greater than a touching-down duration needed by touching-down of a heel.

12. The method according to any one of claims 7-11, wherein the hanging duration of the foot end is greater than a lifting duration needed by lifting of a tiptoe.

13. The method according to any one of claims 1-12, wherein the motion trajectories corresponding to different target gaits are different.

14. A robot, comprising:

a processor; and
a memory, configured to store processor-executable instructions; wherein
the processor is configured to:

determine a motion height of a robot at a target gait;
determine a motion moment corresponding to the motion height according to durations of different motion attitudes executed by the robot at the target gait;
determine a motion trajectory of the robot based on a correspondence relationship between the motion height and the motion moment; and
control the robot to move with the motion trajectory.

15. A non-transitory computer-readable storage medium, storing computer program instructions,
wherein the program instructions, when executed by a processor, implement following steps of:

determining a motion height of a robot at a target gait;
determining a motion moment corresponding to the motion height according to durations of different motion attitudes executed by the robot at the target gait;
determining a motion trajectory of the robot based on a correspondence relationship between the motion height and the motion moment; and
controlling the robot to move with the motion trajectory.

Determine a motion height of a robot at a target gait     S11

Determine a motion moment corresponding to the motion height according to durations of different motion attitudes executed by the robot at the target gait     S12

Determine a motion trajectory of the robot based on a correspondence relationship between the motion height and the motion moment     S13

Control the robot to move with the motion trajectory     S14

Figure 1

Figure 2

Figure 3

Heel   Tiptoe                                    Ground

Walking direction

Figure 4

Optimal
system state
and input

Walking
parameters

User
instruction

Generate
trajectory

Expected
trajectory

NMPC

WBC

Current system state

Current system
state

State
estimation

Figure 5

Maximum heel
swing height

Maximum tiptoe
swing height

t3

t2

t1

$t_{s2}$

$t_{s1}$

Heel

Tiptoe

Ground

$t_{e2}$

$t_{e1}$

Walking direction

Figure 6

Figure 7

X (Projection length)

Figure 8

Figure 9

Figure 10

Figure 11

Figure 12

1300

Apparatus for controlling motion

Height determining module 1310

Moment determining module 1320

Trajectory determining module 1330

Controlling module 1340

Figure 13

1404　　1402　1400

Memory

Processing component

1406
Power component

1408
Multimedia component

Processor

1420

Communication component 1416

Sensor component 1414

1410
Audio component

Input/output interface

1412

Figure 14

Determine a motion height of a robot at a target gait — S21

Determine a motion moment corresponding to the trunk height according to the single-foot walking duration of the robot executing the single-foot walking attitude — S22

Determine a trunk motion trajectory of the robot based on a correspondence relationship between the trunk height and the motion moment — S23

Control the trunk of the robot to move with the trunk motion trajectory at the target gait — S24

Figure 15

Obtain the foot end height according to at least one of a foot end touching-down height, a foot end lifting-off height or a maximum foot end swing height of the robot — S31

Determine a motion moment corresponding to the foot end height — S32

Determine a foot end motion trajectory of the robot based on a correspondence relationship between the foot end height and the motion moment — S33

Control the foot end of the robot to move with the foot end motion trajectory — S34

Figure 16

Europäisches
Patentamt

European
Patent Office

Office européen
des brevets

# EUROPEAN SEARCH REPORT

Application Number

EP 24 17 3501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 820 918 B1 (HONDA MOTOR CO LTD [JP]) 17 December 2003 (2003-12-17) * the whole document * | 1-15 | INV. B25J9/00 B62D57/032 |
| A | US 2012/158182 A1 (LEE JU SUK [KR] ET AL) 21 June 2012 (2012-06-21) * the whole document * | 5-13 | |
| A | US 11 022 983 B2 (UBTECH ROBOTICS CORP [CN]) 1 June 2021 (2021-06-01) * the whole document * | 5-13 | |

TECHNICAL FIELDS
SEARCHED      (IPC)

B25J
B62D

The present search report has been drawn up for all claims

| Place of search | Date of completion of the search | Examiner |
|---|---|---|
| Munich | 14 October 2024 | Vázquez Cabello, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 17 3501

This annex lists the patent family members relating to the patent documents cited in the above-mentioned European search report.
The members are as contained in the European Patent Office EDP file on
The European Patent Office is in no way liable for these particulars which are merely given for the purpose of information.

14-10-2024

| Patent document cited in search report | | Publication date | Patent family member(s) | | Publication date |
|---|---|---|---|---|---|
| EP 0820918 | B1 | 17-12-2003 | DE | 69726799 T2 | 17-06-2004 |
| | | | EP | 0820918 A1 | 28-01-1998 |
| | | | EP | 1364863 A1 | 26-11-2003 |
| | | | US | 5872893 A | 16-02-1999 |
| US 2012158182 | A1 | 21-06-2012 | KR | 20120069333 A | 28-06-2012 |
| | | | US | 2012158182 A1 | 21-06-2012 |
| US 11022983 | B2 | 01-06-2021 | CN | 109987169 A | 09-07-2019 |
| | | | US | 2019204848 A1 | 04-07-2019 |

EPO FORM P0459

For more details about this annex : see Official Journal of the European Patent Office, No. 12/82